(19) Europäisches Patentamt / European Patent Office / Office européen des brevets

(11) **EP 3 091 489 A1**

(12) **EUROPEAN PATENT APPLICATION**

(43) Date of publication:
**09.11.2016 Bulletin 2016/45**

(51) Int Cl.:
*G06Q 10/10* [(2012.01)]   *B60K 28/06* [(2006.01)]

(21) Application number: **16167737.2**

(22) Date of filing: **29.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.05.2015 SE 1500214**

(71) Applicant: **Kontigo Care AB
750 11 Uppsala (SE)**

(72) Inventor: **THÜMER, Juha
756 43 Uppsala (SE)**

(74) Representative: **Aros Patent AB
Box 1544
751 45 Uppsala (SE)**

(54) **METHOD AND DEVICE FOR CONTROLLING AN INDIVIDUAL'S ACCESS TO POTENTIALLY DANGEROUS EQUIPMENT**

(57)    A method is provided for controlling an individual's access to potentially dangerous equipment, the method comprising the steps of, at multiple points in time, requesting the individual to do at least one of making a measurement of a content of at least one intoxicating chemical substance in at least one biological sample from the individual and answering a questionnaire provided in a measurement device, using the measurement device for performing at least one of measuring a content of at least one intoxicating chemical substance in at least one biological sample from the individual and collecting the individual's questionnaire answers, transmitting a result from at least one of the measurement and the questionnaire answers to a central server unit, and storing the result in the central server unit. The method further comprises the steps of, when the individual requests access to potentially dangerous equipment, estimating a likelihood of non-use of the intoxicating chemical substance based on at least the stored results, and if the estimated likelihood is below a predefined level requesting the individual to make a new measurement and then estimating a likelihood of non-use intoxicating chemical substance, based on a result from the new measurement combined with the stored results, and, if the estimated likelihood is above a predefined level, granting the individual access to the potentially dangerous equipment.

Fig. 2

EP 3 091 489 A1

**Description**

**Field of invention**

The present invention generally relates to monitoring the use of intoxicating chemical compounds in an individual and more specifically to controlling access to potentially dangerous machines or items based on said individual's use of intoxicating chemical compounds.

**Background of the invention**

Intentional intoxication is common among citizens in the society. Some individuals choose to consume alcohol, drugs and the similar for a variety of purposes. During intoxication, it is often unsuitable and sometimes unlawful to operate potentially dangerous equipment.

Operating potentially dangerous equipment under the influence of chemical compounds that adversely affects the status of the user is a serious problem in modern society. This includes for example driving a vehicle under the influence of alcohol or drugs. The present invention discloses a method and a device for monitoring the use of toxic chemical compounds in an individual and preventing access to potentially dangerous machines or items when said individual is under the adverse influence of toxic chemical compounds. More particularly, the present invention discloses a method and a device for monitoring and predicting the use of toxic chemical compounds in an individual for the purpose of preventing access to potentially dangerous machines or items when said individual is under the adverse influence of toxic chemical compounds, where the predicted absence of intoxicating chemical compound based on historic data reduces the need for repeated measurements of intoxicating chemical compounds each time access is requested.

One example of intoxicated individuals operating potentially dangerous equipment is drunk driving, which continues to be an issue for modern society. One approach to combating drunk driving has been the installation of devices capable of analyzing alcohol in exhaled breath in vehicles of repeat drunk driver offenders. Such devices often require that a driver blow into a blow tube prior to starting the vehicle. When blood alcohol content (BAC) over a predetermined level is detected, the violation is logged and, in some cases, vehicle operation may be prevented. One patent application related to such inventions is US2014180500 which describes an apparatus, system and method for detecting the presence of an intoxicated driver and controlling the operation of a vehicle. The disclosure describes a system which is capable of determining, at the time point when an individual is attempting to operate a vehicle, if the individual is sober.

Another related disclosure is the patent application TW201426627 which describes a method for connecting an automatic booking taxi function based on blood alcohol content. This method connects an alcohol meter and a hand held digital device capable of booking a taxi, and upon the alcohol meter registering a blood alcohol level above a predetermined limit, the hand held device books a taxi for the drunk individual. Implicitly, this would potentially reduce the number of drunk drivers.

Yet another related disclosure is the patent application US2011/0079073 which describes a system for monitoring sobriety. This system comprises a hand held breath testing device capable of (a) measuring the alcohol level in blood, (b) identifying the individual who is using the testing device through a photograph and (c) communicating with a central server. This system is described as a monitoring system which is difficult to tamper, because a sober friend cannot use the device without being identified on the photograph, and which is capable of alerting a third party in case of the device detects levels of blood alcohol exceeding a predetermined level.

**Summary of the invention**

It is an object of the present disclosure to provide methods, devices and a computer program product for controlling an individual's access to potentially dangerous equipment. This and other objects are met by embodiments of the invention disclosed in the present application, which is based on the repeated registering and analysis of drug use which results in a capability to provide a more complete view of an individual's use of intoxicating compounds when making the decision of providing access to potentially dangerous equipment.

Accordingly, based on the discoveries of the present disclosure, one aspect of the present disclosure provides a method for granting an individual access to potentially dangerous equipment, the method comprising the steps of, at multiple points in time, requesting the individual to do at least one of making a measurement of a content of at least one intoxicating chemical substance in at least one biological sample from the individual and answering a questionnaire provided in a measurement device, performing at least one of measuring, with the measurement device, a content of at least one intoxicating chemical substance in at least one biological sample from the individual and collecting, with the measurement device, the individual's questionnaire answers, transmitting a result from at least one of the measurement and the questionnaire answers from the measurement device to a central server unit, and storing the result in the central server unit. The method further comprises the steps of, when the individual requests access to potentially dangerous equipment, estimating a likelihood of non-use of the at least one intoxicating chemical substance based on at least the stored results, and if the estimated likelihood is below a predefined level requesting the individual to make a new measurement of a content of the at least one intoxicating chemical substance and then estimating a likelihood of non-use of the at least one intoxicating chemical substance, based on a result from the new measurement combined with the stored results, and, if the estimated likelihood is above a predefined level, granting the individual access to the potentially dangerous equipment.

Another aspect of the present disclosure provides a measurement device configured to enable control of an individual's access to potentially dangerous equipment, wherein the measurement device is configured to, at multiple points in time, perform at least one of measuring a content of at least one intoxicating chemical substance in at least one biological sample from the individual and providing a questionnaire to the individual, subsequently collecting the individual's questionnaire answers; and transmit a result from at least one of the measurement and the questionnaire answers to a central server unit to enable control of an individual's access to potentially dangerous equipment.

Yet another aspect of the present disclosure provides a server unit configured to control an individual's access to potentially dangerous equipment, wherein the server unit is configured to, at multiple points in time, request the individual to do at least one of making a measurement of a content of at least one intoxicating chemical substance in at least one biological sample from the individual and answering a questionnaire provided in a measurement device, receive a result from at least one of the measurement and the questionnaire answers from the measurement device, and store the result. The server unit is further configured to, upon the individual requesting access to potentially dangerous equipment, estimate a likelihood of non-use of the at least one intoxicating chemical substance based on at least the stored results, and if the estimated likelihood is below a predefined level request the individual to make a new measurement of a content of the at least one intoxicating chemical substance and then estimate a likelihood of non-use of the at least one intoxicating chemical substance based on a result from the new measurement combined with the stored results, and, if the estimated likelihood is above a predefined level, grant the individual access to the potentially dangerous equipment.

Yet another aspect of the present disclosure provides a computer-program product comprising a computer-readable medium having stored thereon a computer program comprising instructions, which when executed by at least one processor, cause the at least one processor to perform steps of the method(s) as disclosed herein.

**Brief description of the drawings**

The embodiments, together with further objects and advantages thereof, may best be understood by making reference to the following description taken together with the accompanying drawings, in which:

Figure 1a is a schematic diagram illustrating an example of how the present invention can be configured to control the access to a car according to an embodiment.

Figure 1b is a schematic diagram illustrating an example of how the present invention can be configured to control the access to a car according to another embodiment.

Figure 2 is a schematic flow diagram illustrating an example of a method for controlling an individual's access to potentially dangerous equipment according to an embodiment.

Figure 3 shows the sobriety index plotted versus time for an individual who was in treatment for alcohol abuse according to an example.

Figure 4 shows the prediction of sobriety index plotted versus actual sobriety index for 12 individuals according to an example.

Figure 5 illustrates the construction of sobriety index for three different individuals according to an example.

Figure 6 shows a mood adjusted sobriety index for two different individuals according to an example.

**Detailed description of the invention**

For the purpose of this application and for clarity, the following definitions are made:

The term "potentially dangerous equipment" refers to items, devices, machines and the similar that when operated in an improper manner may cause severe damage. Examples of potentially dangerous equipment include, but are not limited to, vehicles (cars, motorcycles, trucks, trains, helicopters, airplanes, boats, military combat vehicles and the similar), firearms and weapons (pistols, rifles, guns, machine guns, hand grenades, explosives, ammunition and the similar), medical devices (respirators, surgical equipment, dialysis machines, and the similar), construction machines and tools (chain saws, nail guns, angle grinders, excavators, and the similar), and industrial machines (CNC grinders, drilling machines, polishing machines, and the similar). Potentially dangerous equipment can also include an area where potentially dangerous equipment is stored, where valuable assets are stored or where intentional or unintentional sabotage may induce danger. Examples of such areas include, but are not limited to, ports, airports, mines, jails and prison facilities, hospitals, military campuses, police offices, banks, and the similar.

The term "intoxicating chemical compound" refers to a single compound or a combination of multiple compounds capable of intoxicating an individual to a level where the general status of said individual is affected. One non-limiting example of an intoxicating chemical compound is ethanol, more commonly known as alcohol, which is readily available to individuals in wine, beer, spirits and other beverages. Ethanol is intoxicating individuals to a level where many countries a limit for the allowed amount of ethanol in the blood to drive a car legally. Other intoxicating chemical compounds include, but are not limited to: cannabinoids as for example available in cannabis, caffeine, MDMA (3,4-methylenedioxymethamphetamine), cocaine, amphetamine, methamphetamine, psilocybin (for example found in "magic mushrooms"), LSD, opiates and opioids, tranquilizers like barbiturates, benzodiazepines and the similar, ketamine, amyl nitrite, mephedrone, mescaline, DMT for example as primary ingredient in ayahuasca, cathine and cathinone (khat), methylphenidate, fentanyl, GHB, ecstasy, narcolepsy medications, sleeping pills, anxiolytics, sedatives, cough suppressants, benzydamine, ephedrine, pseudoephedrine, dimethyltryptamine (DMT), 5-MeO-DMT, theobromine, kavalactones, myristicin, atropine, scopolamine, mitragynine, mitraphylline, 7-hydroxymitragynine, raubasine, valerian, lysergic acid amide (LSA, ergine), ibogaine, arecoline, rauwolscine, yohimbine, corynantheidine, psilocybin, psilocin, bufotenin, ibotenic acid, muscimol, antihistamines including but not limited to diphenhydramine, chlorpheniramine, orphenadrine and hydroxyzine, scopolamine, paracetamol (para-acetylaminophenol), non-steroidal anti-inflammatory drugs (NSAIDs) such as salicylates, hydrocodone, codeine, oxycodone, hydromorphone, carisoprodol, chloral hydrate, diethyl ether, ethchlorvynol, gabapentin, gamma-butyrolactone (GBL, a prodrug to GHB), gamma-hydroxybutyrate (GHB), glutethimide, ketamine, meprobamate, methaqualone, phenibut, pregabalin, propofol, nepetalactone, dimenhydrinate, hyoscyamine, dextromethorphan, dextromethorphan, chlorpheniramine, methoxetamine, phencyclidine, and nitrous oxide, to mention a few examples.

The term "intoxication history" refers to the status of an individual in terms of repeatedly measured content of one or more intoxicating chemical compounds in said individual. Intoxication history may for example contain frequency of intoxication, intensity of intoxication and duration of intoxication. Intoxication history may optionally be divided into different timeframes. Some non-limiting examples of timeframes may be: Current intoxication which for example may relate to the timeframe of 1-3 days, short term intoxication history which for example may relate to the timeframe of 1-30 days, medium term intoxication history which for example may relate to the timeframe of 10-100 days, and long term intoxication history which for example may relate to the timeframe of 1-6 months to 1-10 years or even longer.

The term "sober" refers to the status of an individual as either being completely unaffected by intoxicating chemical compounds, or being exposed to a certain stimulus to a level which is below a predetermined threshold.

The term "central server" refers to a computer which is available through one or more communication protocols such as the internet.

The term "digital controller" refers to a computer, typically a small computer, programmed to control access to a key or other locking/unlocking component of a potentially dangerous equipment or a key or other locking/unlocking component of the storage or containment of a potentially dangerous equipment. One non-limiting example is a digital controller being capable of unlocking a locked door behind which potentially dangerous equipment is stored. Another non-limiting example is a digital controller capable of preventing digital communication between computers in a potentially dangerous equipment such as e.g. the communication between the ignition key and the motor in a car.

Common for prior art as described above is that the testing of if an individual is suitable for operating a potentially dangerous equipment is conducted in the immediate vicinity of the equipment and at the time access to the potentially dangerous equipment is requested. As an example, in the case of inventions for preventing drunk driving known in the art, testing for blood alcohol content is conducted at the time the driver is seated in the car.

The present invention provides methods to aid in determining if an individual is allowed to have access a potentially dangerous equipment. The present invention also provides a device suitable for use in the method. The basic principle of the invention is to record the historic use of one or more intoxicating chemical compounds and to determine, partly based on the intoxication history, if an individual should be granted access to a potentially dangerous equipment.

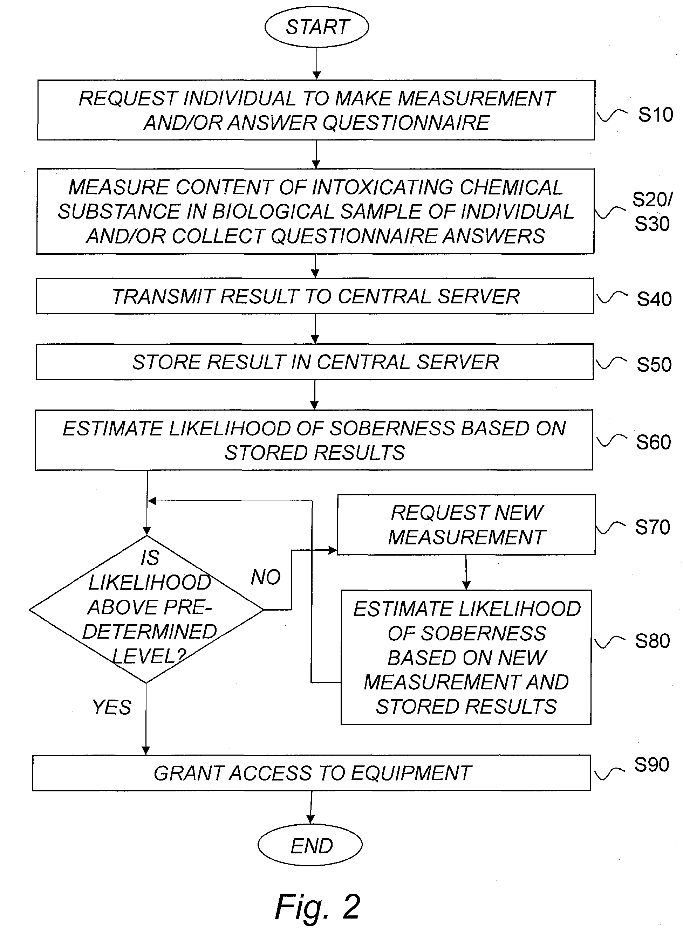

Figure 2 is a schematic flow diagram illustrating an example of a method for controlling an individual's access to potentially dangerous equipment according to an embodiment. The method comprises performing the following steps:

- at multiple points in time, requesting S10 the individual to do at least one of:

o making a measurement of a content of at least one intoxicating chemical substance in at least one biological sample from the individual;

o answering a questionnaire provided in a measurement device,

performing at least one of:

o measuring S20, with the measurement device, a content of at least one intoxicating chemical substance in at least one biological sample from the individual;

o collecting S30, with the measurement device, the individual's questionnaire answers,

transmitting S40 a result from at least one of the measurement and the questionnaire answers from the measurement device to a central server unit, and storing S50 the result in the central server unit;

• upon the individual requesting access to potentially dangerous equipment, estimating S60 a likelihood of non-use of the at least one intoxicating chemical substance based on at least the stored results;

• if the estimated likelihood is below a predefined level:

o requesting S70 the individual to make a new measurement of a content of the at least one intoxicating chemical substance; and

o estimating S80 a likelihood of non-use of the at least one intoxicating chemical substance based on a result from the new measurement combined with the stored results; and

• if the estimated likelihood is above a predefined level, granting S90 the individual access to the potentially dangerous equipment.

The method is described in terms of providing access to a potentially dangerous equipment, but this does not limit the method for use in providing access to a potentially dangerous area or similar.

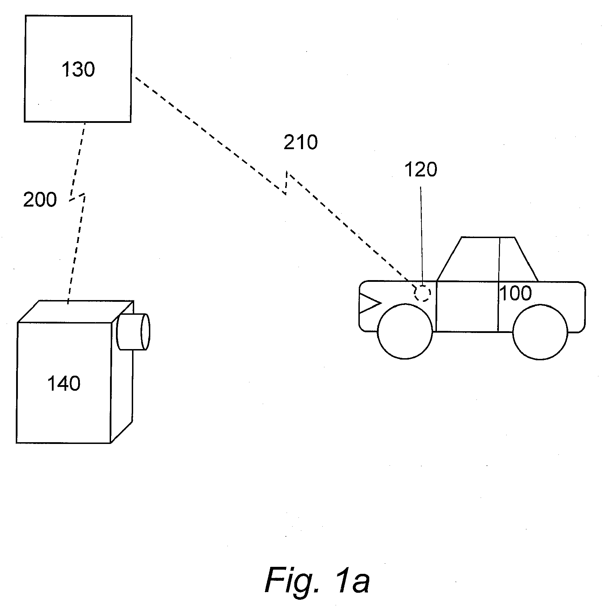

• With reference to figure 1a, the method may also be understood as comprising: Supplying an individual with a measurement device 140 capable both of measuring the content of one or more intoxicating chemical compounds and of communicating with a central server unit 130 over a wireless connection 200.

• Said central server unit 130 requesting said individual to use the device 140 at multiple points in time and storing the results in the central server unit 130.

• Providing a digital controller 120 which is attached to or incorporated in a defined potentially dangerous equipment 100, where the digital controller 120 is capable of communicating with the central server unit 130 over a wireless connection 210 and optionally the measurement device 140.

• Upon said individual requesting access to said defined potentially dangerous equipment 100, the digital controller 120 of said potentially dangerous equipment 100 asks the central server unit 130 if access can be granted.

• The central server unit 130 attempts to determine the likelihood of the individual being sober and hence allowed to operate the potentially dangerous equipment 100 using historic results.

• If said individual is determined to, with a high likelihood, be sober, a message is sent to the digital controller 120 to provide access to the potentially dangerous equipment 100.

• If said individual is determined less likely to be sober a message is sent from the central server unit 130 to the measurement device 140 so as to request a new measurement of said one or more intoxicating chemical compounds. Upon receiving the results of the new measurement, the server unit 130 again attempts to determine the likelihood of the individual being sober and allowed to operate the potentially dangerous equipment 100. If said individual after this repeated measurement is determined to, with a high likelihood, be sober and allowed to operate the potentially dangerous equipment 100, a message is sent to the digital controller 120 to provide access to the potentially dangerous equipment 100.

The measurement device 140 shown in figure 1a is configured to enable control of an individual's access to potentially dangerous equipment 100. The server unit 130 is configured to do the following at multiple points in time:

• perform at least one of:

o measuring a content of at least one intoxicating chemical substance in at least one biological sample from the individual;

o providing a questionnaire to the individual and collecting the individual's questionnaire answers;

- and transmit a result from at least one of the measurement and the questionnaire answers to a central server unit 130 to enable control of an individual's access to potentially dangerous equipment.

Thus, the measurement device is capable of both measuring the content of one or more intoxicating chemical compounds and of communicating with a central server unit is a hand held unit in an embodiment, in a particular embodiment weighing less than 1 kg and having a total volume less than 2 liters. In an embodiment, the device communicates with the central server unit using Internet. Furthermore, the measurement device may in an embodiment conduct the measurement of one or more intoxicating chemical compounds using a non-invasive sample specimen. Examples of non-invasive sample specimens include, but are not limited to, analysis of urine, feces, sweat, saliva, and exhaled air.

The server unit 130 shown in figure 1a is configured to control an individual's access to potentially dangerous equipment 100. The server unit 130 is configured to do the following:

- at multiple points in time, request the individual to do at least one of

  o making a measurement of a content of at least one intoxicating chemical substance in at least one biological sample from the individual;
  o answering a questionnaire provided in a measurement device 140,

  receive a result from at least one of the measurement and the questionnaire answers from the measurement device 140,
  and store the result;
- upon the individual requesting access to potentially dangerous equipment 100, estimate a likelihood of non-use of the at least one intoxicating chemical substance based on at least the stored results;
- if the estimated likelihood is below a predefined level:

  ◦ request the individual to make a new measurement of a content of the at least one intoxicating chemical substance; and
  o estimate a likelihood of non-use of the at least one intoxicating chemical substance based on a result from the new measurement combined with the stored results;

- if the estimated likelihood is above a predefined level, grant the individual access to the potentially dangerous equipment 100.

One important feature of the invention is that the central server unit is requesting the individual to make measurements. This makes it difficult for the individual to hide intentional use of intoxicating chemical compounds, because the time-points for measurement are out of the individual's control. The request as such can, for example, be communicated through the measurement device as a sound or a lamp being switch on. Another non-limiting alternative is to make the central server unit send a short text message (SMS) to the individual's cell phone. Yet another non-limiting alternative is to make the central server unit call the individual and play a prerecorded phrase which tells the individual that a measurement should be conducted. Still another non-limiting alternative is to make the central server unit can send an e-mail to the individual.

The digital controller which is attached to or incorporated in a defined potentially dangerous equipment is typically a small computer which both communicates with the central server unit and which controls some kind of lock that prevents access to or operation of the potentially dangerous equipment it is attached to. One possible non-limiting example is a cabinet equipped with a physical lock which is operated by the digital controller. If a potentially dangerous equipment such as a rifle is stored in the cabinet, access to the rifle will require the individual to be confirmed sober by the central server unit.

The step of the individual requesting access to a defined potentially dangerous equipment can be achieved in many different ways. In the case of a locked cabinet, access could for example be requested by pushing a button labeled "OPEN". In the case of a car, the request could for example be turning the ignition key on. In any case, when the digital controller of a potentially dangerous equipment receives a request to operate or access the potentially dangerous equipment, a question is sent to the central server unit. Only after the central server unit grants access, full operation or access is granted.

When the central server attempts to determine the likelihood of the individual being sober and allowable for operation of the potentially dangerous equipment, the first attempt involves only historic results stored in the central server. Since the server is determining the time points of the requests to the individual for measurement of intoxicating chemical compounds, it might be the case that such a measurement request was issued just recently to the individual's request to access or operate a potentially dangerous equipment. If so, it may be deemed unnecessary to repeat the measurement and instead grant the individual access to the equipment. Another non-limiting possibility is to evaluate if the individual has been recorded sober the previous 24 or 48 or 72 or 96 hours. A continuous soberness during a few days may be deemed as sufficient to immediately grant the individual access to the equipment.

If the central server determines that the individual is, with a high likelihood, sober and allowable to operate the potentially dangerous equipment, a message is sent to the digital controller to provide access to the potentially dangerous equipment. This message can be transmitted using the internet or a GSM cell phone network or any other similar network.

If the central server does not have sufficient data to determine the soberness of the individual, or if the individual has been recorded intoxicated recently, a new request to measure is sent to the individual. This request may optionally have additional restrictions, such as that it has to be conducted within a short time from receiving said request (such as within one minute or five minutes or fifteen minutes from receiving the request) to make the falsifying of results more difficult. Upon receiving the results of the new measurement, the server unit again attempts to determine the likelihood of the individual being sober and allowable for operation of the potentially dangerous equipment. The measurement result as such is stored along with all other recorded data so as to be of use for evaluating future requests of access to potentially dangerous equipment. If said individual after this repeated measurement is determined to, with a high likelihood, be sober and allowed to operate the potentially dangerous equipment, a message is sent to the digital controller to provide access to the potentially dangerous equipment.

The measurement device should preferably contain some kind of feature that identifies the individual who is actually using the device. If such a feature is not available, it would be possible for an individual to ask a sober friend to operate the measurement device at times when a measurement is requested. One possible method for identifying the individual who is currently using the measurement device is to let the device take a photo of the operator during the measurement and transfer the photo to the central server together with the obtained result. In case suspicions regarding an individual attempting to falsify measurements, such photos could be reviewed. Other possible methods for identifying the individual who is operating the measurement device includes, but is not limited to, conducting a retinal or iris scan during measurement, analyzing a voiceprint of the individual or reading a fingerprint during measurement. As an example, a fingerprint reader or other suitable device for identifying the individual could be attached to the measurement device.

The central server unit is typically a computer which comprises a program capable of regularly, or with irregular time intervals, requesting an individual to make measurement, storing measurement results, and estimating if present data is indicative of the individual being sober. The purpose of repeatedly requesting the individual to make measurements is to collect a time-line of intoxication data. Such an intoxication history can reveal onset patterns, frequency, duration and intensity of intoxications. Such information is valuable when assessing the likelihood that an individual is sober. For example, if intoxication history indicate that an individual is highly intoxicated approximately once per month with onset in the evening, but the duration is only one day, it may be sufficiently accurate to rely on an evening measurement previous day until the afternoon present day. As another example, if a different individual has an intoxication history which indicate frequent intoxications at mild intensity during 3-5 days, a new measurement may be deemed necessary every time access to the potentially dangerous equipment is requested.

It is possible and sometimes suitable to allow partial access or limited operation to an individual who is deemed under the influence of intoxicating compounds. For example, if a car is equipped with a digital controller, and the individual is deemed under the influence of intoxicating compounds but still is in acute need of moving the car, it could be acceptable to allow access to the car but having the digital controller limiting the speed to a low value such as 10 km/h, or 20 km/h, or 30 km/h. This would make it possible for the individual to move the car from a dangerous position (if for example standing on a railroad track) or to drive to the emergency care unit of a hospital with a heavily injured fellow citizen, to mention two non-limiting examples.

A key feature of the present invention is the ability to estimate the likelihood of an individual being sober based on historic data. This means that the need for immediate measurement is not required every time access to the potentially dangerous equipment is requested, which is convenient for the individual. This feature further has an implicit encouragement function: If an individual is succeeding in not using an intoxicating chemical substance which consequently results in a favorable intoxication history, the individual is implicitly rewarded by a lower frequency of immediate tests upon requesting access to the potentially dangerous equipment. It is possible to use many different underlying methods for determining if the intoxication history is indicative of an individual being sober. One non-limiting method is to make a weighted average of the measurement results related to intoxication the recent year, where newer measurements are given higher weight than older. Should an individual be confirmed intoxicated at one point in time, this intoxication event will have high impact on the soberness estimation shortly after, but will gradually reduce in impact as time goes. Another possible method is to extract a short term intoxication history which relates e.g. to the previous month and a long term intoxication history that relates e.g. to approximately the recent year or years, and evaluate if both the short term and the long term history are indicative of soberness. In the short term assessment, the onset of a relapse can be captured, while as in the long term assessment, the change of the intoxication habit of the individual can be monitored. This makes it possible to determine if a present intoxication event is likely an accident (if the long term history suggests that the individual is staying sober most of the time) or if it likely is part of a pattern suggesting a larger relapse.

In more detail, one possible non-limiting example of a method for combining short term intoxication history with medium term or long term intoxication history for the purpose of determining the soberness of an individual is the following. First, a short term intoxication (STI) value is calculated. This STI value can be constructed in many different ways, but one possible definition is the following:

$$STI = (\,(\text{mild intoxication days the recent 30 days}) + 3*(\text{severe intoxication days the recent 30 days})\,) \,/\, 30$$

The expression "mild intoxication day" could e.g. refer to a day when a measured value of an intoxicating chemical compound above but near the value for confirming intoxication is registered. "Severe intoxication day" could e.g. refer to a day when a measured value of an intoxicating chemical compound is much higher than the value for confirming intoxication is registered. For example, for alcohol, the limit for confirming intoxication could e.g. be "detection limit of the instrument" or it could be "0.2 ‰ Blood alcohol content" and the limit for considering intoxication to be severe could e.g. be "0.5 ‰ Blood alcohol content".

Second, a medium term intoxication (MTI) value can be calculated in a similar manner. One possible definition is the following:

$$MTI = (STI[30]*3 + STI[60]*2 + STI[90]*1) \,/\, 6$$

Wherein STI[x] represents the historic STI value at x days before the day of calculating the MTI value, so that STI[1] represents the STI value of yesterday, and STI[2] represents the STI value of the day before yesterday. In plain words, MTI could e.g. be defined as the weighted sum of three historic STI values (in this example one month ago, two months ago and three months ago) where the most recent historic STI value is given higher weight and the oldest STI value is given lowest weight. A long term intoxication (LTI) value can be calculated in still a similar manner, but covering a time period greater than the MTI value (>3 months in this example).

It is also possible to introduce a hangover value (HV) indicating that a recent intoxication event occurred meaning that the individual may be unsuitable to access potentially dangerous equipment even though a measurement of intoxicating compound report values below the limit for confirming intoxication. The importance of estimating hangover is illustrated in that some commercial air carriers have rules regarding required soberness during several hours before departure, for the purpose of minimizing risk of a hangover captain.

By combining intoxication measures of different time-frames like e.g. STI, MTI, LTI, HV and/or other data a reliable measure of the likelihood of being intoxicated can be created. Other data includes, but is not limited to, time of day, day of week, result of the previous measurement, elapsed time since the previous measurement, number of measurements that have been missed in the recent past, and similar.

Another possible non-limiting method for using intoxication history for the purpose of determining the soberness of an individual is the following. A sobriety index (SI) can be calculated using the most recent measurement value of intoxicating chemical, combined with one penalty if the recent measurement request was missed and another penalty if repeated high values of intoxicating chemical or missed results were registered. The impact on SI of a confirmed elevated value of intoxicating chemical may optionally differ depending on when it occurs: elevated value in an evening is less likely a technically failed measurement as an elevated value on Tuesday mid day. Such a sobriety index has considerable predictive power in time series analysis.

It is also possible to supplement the method with a series of other functions, including but not limited to, monitoring that the measurement device (and hence presumably the individual) has been in close proximity to a predefined geographic position at a predetermined time point (such as meetings with a therapist or meetings with support groups) through use of GPS (global positioning system), and questionnaires that regularly asks the individual questions regarding current addictive behavior.

A suitable questionnaire can for example be embedded in a hand held device, such as a smartphone, and can be configured to at different frequencies (e.g. at least once per week, more preferably once or twice per day, and in extreme cases once per hour during daytime) ask an individual questions that are related to intoxication or that reveal increased risk for the individual intoxicating himself or herself. Suitable questionnaires may be selected from those available and validated, such as questionnaires to monitor addiction (where AUDIT is one non-limiting example) and psychological status (where MADRS is one non-limiting example). Questionnaires may also cover areas like daily mood and exercise of routines (work, school, therapy), motivation, engagement and self-efficacy, to mention a few non-limiting examples. These data can in the same way as measurements of intoxicating compound be compressed and compiled into short, medium and long term risk factors (SRF, MRF, LRF) useful for estimation of the risk of intoxication and the need of a physical test. For example, if the motivation level to be sober is low and the daily mood is poor the risk of self-inflicted intoxication is higher and therefore a measurement of intoxicating compound should be performed more frequently.

The actual measurement results related to intoxication can potentially be combined with a range of additional data (some of which are exemplified above, and potentially compressed into variables like SRF, MRF, and LRF, in the process of determining if an individual is likely to be sober or not.

As an optional feature, since the questionnaire is preferably managed through a computer, it is not only the answers to the asked questions that may be important (Questionnaire Answers, QA), but also how the answers were delivered (Questionnaire Motorics, QM). For example, in a questionnaire that is related to mood, the time spent to answer questions is likely longer at depressed mood than in good mood. Hence, the answers provided to the mood-related questions can be cross checked to the time spent on answering the questions so as to gather both conscious and motoric information on the same subject for the purpose of producing a more reliable estimate of the true mood of the individual. In a similar manner, if a questionnaire is related to alcohol consumption, the speed and motoric precision will probably be reduced also at low level intoxication. This means that if a multiple-choice question is presented, and time to answer combined with the distance between where on the screen the individual indicates the answer as compared to the position of the indicators for the multiple choice answers will reveal the speed and motoric precision of the individual. When combining the conscious and motoric information on the same subject for the purpose of producing a more reliable estimate of the true condition of the individual. It is beneficial to gather baseline information about each individual to make possible comparisons of current Questionnaire Answers (QA) and current Questionnaire Motorics (QM) so that deviations from the normal state of an individual can be evaluated and used in combination with e.g. STI, MTI, LTI, HV, SRF, MRF, and/or LRF to produce a reliable estimate if an individual is suitable for operating potentially dangerous equipment.

The present invention provides a non-transitory computer readable medium comprising instructions for causing a computer to perform particular steps of the above-described method, such as the estimation of if an individual is likely to be sober which are typically conducted in the central server computer. Furthermore, the measurement device may contain a non-transitory computer readable medium comprising instructions for causing a computer to perform parts of the procedures related to the measurement of a chemical substance. The digital controller used for providing access to the potentially dangerous equipment also typically include a non-transitory computer readable medium comprises instructions, such as software code means, for communicating with the central server computer and to control an actuator capable of providing access to the potentially dangerous equipment as described above.

An example of a suitable type of measurement device comprises an apparatus capable of measuring breath alcohol content by analyzing the exhaled air of an individual, where breath alcohol level is a surrogate for blood alcohol level. Such devices are commonly known as breathalyzers. One possibility is use a breathalyzer of type Kontigo tripleA. This device measures the Breath Alcohol (BrAC) Level of an individual using a sampling pump and a fuel cell which converts alcohol content to an electric signal, said signal being dependent on the alcohol concentration. The breath sample is taken when the individual has delivered more than 1.2 liters of air directly from his/her lungs. The electric signal is processed and converted to digital form in a microcontroller and is then compared to calibration values to allow transformation to a corresponding BrAC-level in mg/L. When the BrAC-level has been calculated it can then be transmitted to a connected host smart phone which in turn can deliver the value to a central server unit. Before, during and after the measurement the actual state is visualized to the user with light emitting diode indications in various colors. The Kontigo tripleA device is further equipped with a camera which is depicting the individual during the measurement, so as to provide evidence that it is a particular individual operating the device. This above described example of a measurement device hence comprises two parts: one part that contains a breath analyzer and one other part that is a regular smart phone capable of communicating with both the breath analyzer and central server units. By dividing the measurement device into two parts where one, the smart phone, is a regular existing product the cost for the measurement device is reduced.

It is important to mention that it is not necessary for the measurement device to measure the exact intoxicating chemical compound. It is in some cases possible to measure a metabolite or a catabolite that is related to the intoxicating compound. The measurement of ketone which is related to alcohol consumption is one such indirect measurement that is capable of determining if an individual has consumed alcohol.

A different application of the present invention is the use of intoxication history to determine if a health care provider should follow up an individual with known addiction behavior. It is well known that in the care of alcoholics, drug addicts, and individuals with similar diseases or disorders, there is a high frequency of relapse after treatment. As a particular example, in the care of alcoholics it has been reported that even after treatment, the average short-term abstinence rates is only approximately 40% as discussed in the report "Rates and predictors of relapse after natural and treated remission from alcohol use disorders" by RH Moos and BS Moos as published in Addiction. Feb 2006; 101(2): 212-222, which is incorporated by reference herein. This means that the society has a lot to benefit from improved care of alcoholics after the actual treatment has taken place. The present invention can be applied as a monitoring tool where the intoxication history is captured and stored, and in cases where an individual is determined to be intoxicated a message can be sent to the health care provider. This means that instead of controlling access to a potentially dangerous equipment, the present invention is capturing relapse of disease in an early stage, which allows health care providers, family members, and other related individuals to become informed so as to attempt to interrupt the relapse. The present invention may, when used as a monitoring tool, be supplemented with a series of other functions, support such as encouraging text messages or e-mails, possibly synchronized with times or geographic locations where risk for relapse is high (for example Friday evening in a restaurant area).

In a particular example embodiment, the method comprises the steps of

- Providing at least one biological sample from said individual
- In said biological sample, measuring the quantity of an intoxicating chemical substance and storing the measured quantities in a central server repository
- Determining, at time of individual requesting access to a potentially dangerous equipment, if said individual has met predefined criteria which are indicative of non-use of said intoxicating chemical substance during the recent time.
- In case said individual meet said predefined criteria, then granting access to said potentially dangerous equipment.
- In case said individual does not meet said predefined criteria during the recent time, then requesting said individual to make a new measurement of said intoxicating chemical substance and granting access to said potentially dangerous equipment only if the newly measured quantity of intoxicating chemical substance is below a predetermined threshold.

CHARACTERIZED IN THAT

- The step of providing at least one biological sample is repeated at least once per week
- Said measuring of said intoxicating chemical substance is conducted in a hand-held device
- Said determination of if said individual has met said predefined criteria indicative of non-use of said chemical substance during recent time is made based a combination of measured quantities of intoxicating chemical substance during at least the recent month combined with other information.

In one embodiment, the determination of if said individual has met said predefined criteria indicative of non-use of said chemical substance during recent time is made based on a combination comprising values related to (a) short-term intoxication history covering the recent 3 to 5 weeks, (b) medium-term intoxication history covering recent 3 to 5 months, and (c) other information.

In still another embodiment, the determination of if said individual has met said predefined criteria indicative of non-use of said chemical substance during recent time is made based on a combination which further comprises information related to said individual taking part in a support program or treatment program related to addictive use of said intoxicating chemical substance,

In yet another embodiment, the potentially dangerous equipment is a vehicle or a boat or an airplane or a weapon.

In still another embodiment, the biological sample is exhaled air or saliva.

In yet another embodiment, the intoxicating chemical substance is alcohol.

In still another embodiment, the step of granting an individual access to potentially dangerous equipment comprises one or more of

- Unlocking a door or a hatch;
- Turning on a power supply to an electric apparatus;
- Opening a valve to provide liquid or gaseous fuel to an apparatus which need such a fuel to function; or
- Enabling digital communication between modules that are essential for a potentially dangerous equipment to function.

Examples

Example 1

One possible application of the present invention is to control the access to a weapon locker or weapon cabinet only if the individual is confirmed sober. In such a setting, a weapon locker is equipped with a digital controller that controls a lock mechanism that keeps the locker locked and which has a button or similar for releasing the lock and opening the locker. A requirement to get access to the weapon locker is that the individual is following an intoxication monitoring program where a central server regularly requests the individual to measure intoxication level. When the individual request access to the locker by pressing the open button, the digital controller connects to the central server unit and ask if the central server unit find it acceptable to open the locker. The central server unit evaluates the intoxication history of the individual and other data, and if deemed sufficiently likely that the individual is sober, then a message is sent back to the digital controller with instructions to allow access to the locker. In case the evaluation results in a too low likelihood of the individual being sober or if too long time has passed since the previous measurement point, then a measurement request is sent to the individual. After the central server unit receives the results of the measurement, soberness is re-evaluated and if the individual is sober a message is sent back to the digital controller with instructions to allow access to the locker. It may further be advisable that there is a hangover control, so that access is rejected in case severe intoxication has been detected the previous 1 day or 2 days or 3 days, irrespective of if the most recent intoxication measurement indicates that the individual is sober.

Example 2

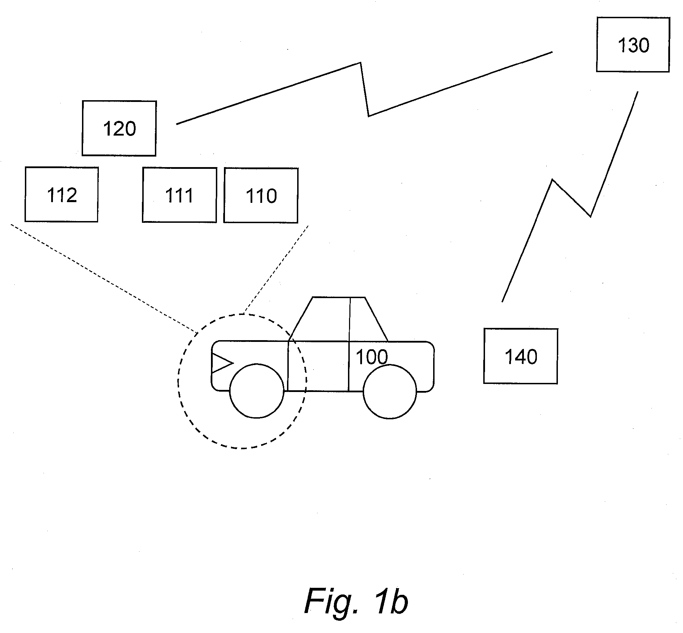

Another possible application of the present invention is to control the access to a car. This process is illustrated in Figure 1b. A requirement to get access to the car is that the individual is following an intoxication monitoring program where a central server regularly requests the individual to measure intoxication level. If an individual wants to access to a car (100), the ignition key is inserted into the ignition lock (110). The ignition lock is transmitting an electrical signal to a computer in the car (111), which in a normal car starts the motor (112). With the present invention application, there is a digital controller (120) placed somewhere in this chain, for example between the car computer (111) and the motor (112). The digital controller is designed to prevent the electric signals from the computer to reach the motor, unless the individual is determined likely sober. Hence, upon the individual putting the ignition key in the ignition lock, the central controller (120) establishes communication with the central server (130) which estimates, using intoxication history and other data, if it is likely that the individual is sober. If the central server determines that the likelihood of soberness is high, the digital controller is allowed to let the car computer start the motor. If the central unit determines the likelihood to be lower than a predetermined likelihood, a measurement request is sent from the central server (130) to the measurement device (140) so as to make the individual to make another measurement. Upon receiving the results from the new measurement, the central server re-evaluates if the individual is sober and provide instructions to the digital controller to allow starting the car if soberness has been confirmed.

Example 3

Still another possible application of the present invention is to control the access to a web-site or computer system. Certain web-sites or computer systems are designed for users to have access to valuable or dangerous equipment. Non-limiting examples include the web-site of a bank, the control computer system of a nuclear power-plant, the control computer system of a CNC machine, airport security computer systems and the similar. Access to such web-sites or computer systems is often granted based on advanced authenticity methods, such as biometric sensors (e.g. a fingerprint reader) or a digipass (a physical device that generates authorization codes and digital signatures necessary for identifying an individual).

In the present example, a health care professional is using web-site designed for scheduling doctor's appointments for patients diagnosed with sexually transmitted disease. Such personal information is sensitive and can be misused to blackmail the patient. A requirement to get access to the web-site is that the individual is following an intoxication monitoring program where a central server regularly requests the individual to measure intoxication level. To elevate security, when logging on to the web-site the heath care professional has to both identify himself/herself through use of a user name, a password and a use of a biometric sensor. When validating the accuracy of the user credentials, the web-site is also requesting sobriety status from a central server. In case the central server estimates, using intoxication history and other data, if it is likely that the individual is sober. If the central server determines that the likelihood of soberness is high, access to the web site is granted. If the central unit determines the likelihood to be lower than a predetermined likelihood, a measurement request is sent from the central server to a measurement device so as to make the individual to make another measurement. Upon receiving the results from the new measurement, the central server re-evaluates if the individual is sober and provide instructions to grant access to the web-site if soberness has been confirmed.

Example 4

Yet another possible application of the present invention is to control the access to a facility wherein an individual may cause damage or dangerous situations for others. Non-limiting examples include restricted areas at airports, military facilities, prisons and the similar. Access to such facilities is often granted based on advanced authenticity methods, such as biometric sensors (e.g. a fingerprint reader or a retinal scanner) or entrance cards with embedded digital information (magnetic strip, RFID structure, digital circuit with embedded connectors such as a SIM card) combined with personal identification codes (PIN).

In the present example, an employee working with loading and unloading airport cargo arrives to work. A requirement to get allowance to enter the facility is that the individual is following an intoxication monitoring program where a central server regularly requests the individual to measure intoxication level. Entrance is granted if the employee can identify himself/herself through use of an entrance card with a magnetic strip and a PIN code. When validating the accuracy of the user credentials, the web-site is also requesting sobriety status from a central server. In case the central server estimates, using intoxication history and other data, if it is likely that the employee is sober. If the central server determines that the likelihood of soberness is high, access to the facility is granted. If the central unit determines the likelihood to be lower than a predetermined likelihood, a measurement request is sent from the central server to a measurement device so as to make the employee to make another measurement. Upon receiving the results from the new measurement, the central server re-evaluates if the employee is sober and provide instructions to grant access to the facility if soberness has been confirmed.

Example 5

This example shows that it is possible to estimate if an individual is at risk being intoxicated. Twelve individuals known to have an adverse drinking behavior were provided with a portable blood alcohol measurement device (Kontigo tripleA) which is communicating with a central server unit for receiving information about when next measurement is scheduled and for storage of measurement results. At the time a of blood alcohol measurement, a brief questionnaire with questions related to mood and well-being was shown to the individual and questionnaire results are stored in the central server unit. For each individual, a sobriety index (SI) for monitoring misuse of alcohol of an individual was composed of the actual measured blood alcohol values (requested three times per day) combined with recent missed measurements. Unwanted results (elevated blood alcohol level or missed measurement) were given additional penalty if occurring evening or morning, and if occurring consecutively. In schematic equation form, SI was calculated based on "raw sobriety index" (rawSI) according to

$$rawSI = 100 - (A + B*[\text{timepoint penalty}]) * [BAC] - C*[\text{missedBAC}] - D * [\text{consecutive penalty}]$$

where A, B, C, and D are coefficients or weights, [timepoint penalty] is 1 if the most recent measurement of blood alcohol was evening or morning or a Friday and 0 otherwise, [BAC] is the most recent blood alcohol level measurement (expressed in g/L), [missedBAC] is 1 if the most recent request for measurement of blood alcohol was not conducted within the stipulated time-frame and 0 otherwise, and [consecutive penalty] is 1 if both the most recent blood alcohol measurement and the second most recent blood alcohol measurement both had either elevated blood alcohol level or were not conducted within the stipulated time-frame (and 0 otherwise). The sum of the coefficients (A + B) is approximately 40-60 divided by the blood alcohol legal limit for driving a car. The coefficient C is approximately 40-60, and the coefficient D is approximately 100-C. Sobriety index SI is calculated as the average of rawSI obtained three times per day during the recent 7 days.

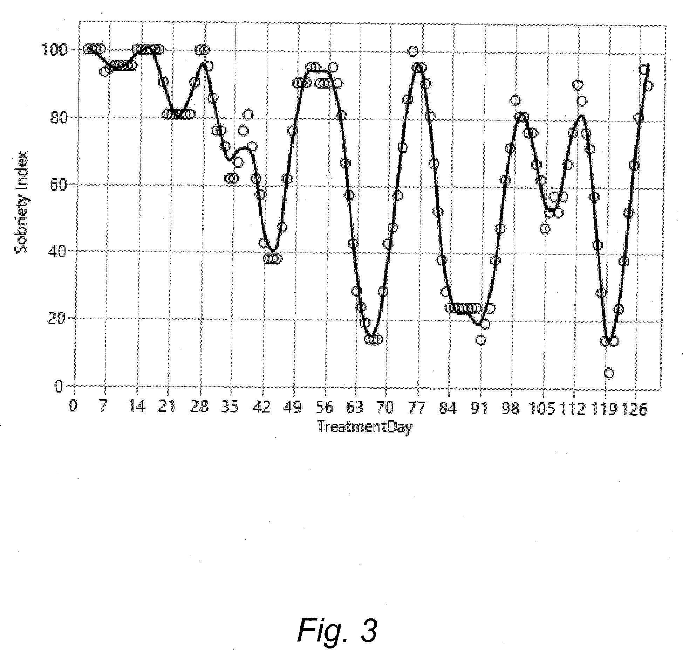

Figure 3 shows the sobriety index plotted versus time during 126 days for an individual who was in treatment for alcohol abuse. This individual was in confirmed relapse approximately every 14 days, which was occurring at the same time as sobriety index was below 60.

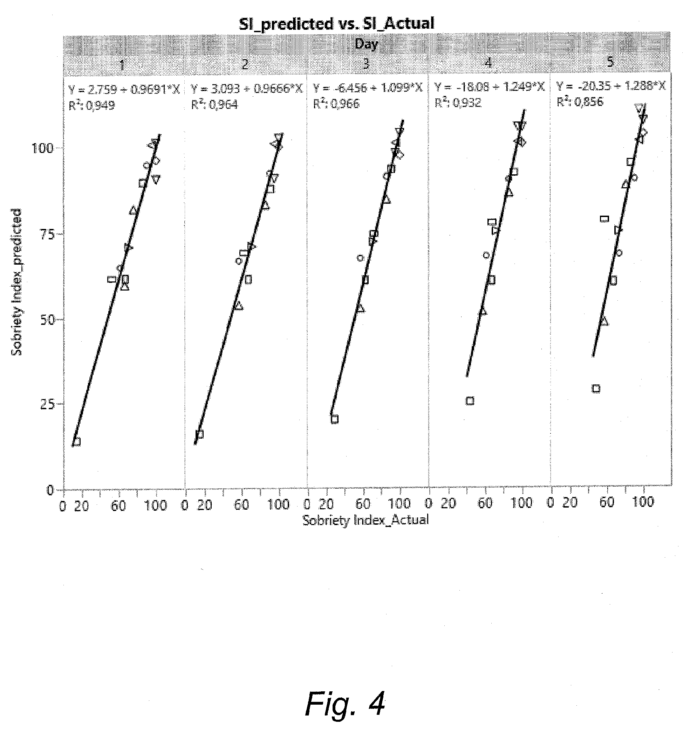

When applying a time-series model to the series of SI, prediction of SI for future time points can be conducted. Figure 4 shows the prediction of SI plotted versus actual SI for 12 individuals. When fitting a straight line to the predicted versus observed scatter plot, the intercept is close to zero (2.7 to 6.4), the coefficient close to one (0.97-1.01) and R-square is 0,95-0.96 when predicting SI the first, second and third day into future. The model becomes less accurate day 4-5.

This example illustrates, using real data collected from a multitude of individuals during more than 100 days, that it is possible to calculate a sobriety index which is suitable for prediction of near-future sobriety.

Example 6

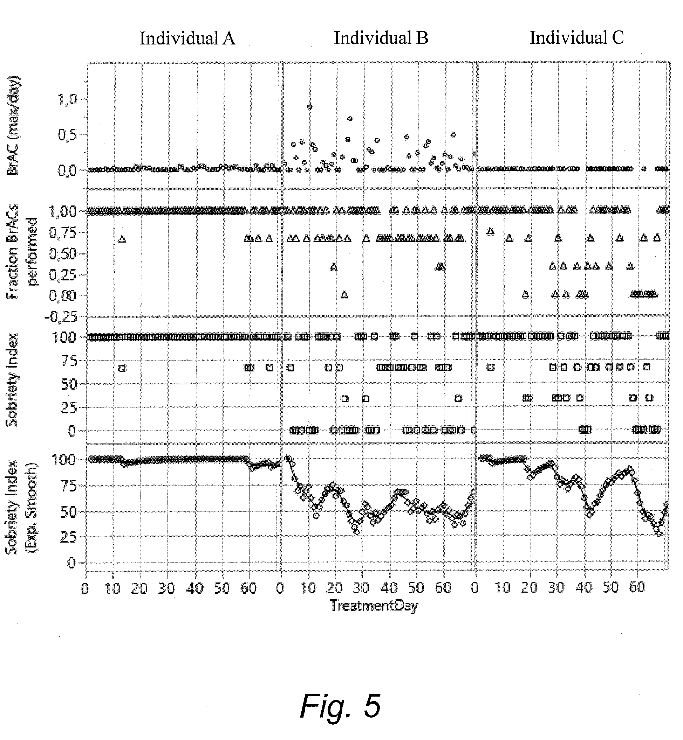

This example shows that it is possible to use SI for estimating if an individual is at risk being intoxicated. Data from three individuals being part of the same clinical study as described in Example 5 above are shown in Figure 5. The three individuals were, in addition to being part of the monitoring program, also monitored using biomarkers indicative of alcohol consumption, including blood biomarkers Phosphatidylethanol (PEth) and Carbohydrate-Deficient Transferrin (CDT). Urine biomarkers ethyl glucuronide (EtG) and ethyl sulfate (EtS) can also be used for monitoring short term consumption. Since PEth is eliminated from the body with approximately 4-5 days half-life, it is a suitable biomarker for confirming alcohol consumption recent week. Use of PEth, CDT, EtG and EtS has been discussed in "Monitoring of the alcohol biomarkers PEth, CDT and EtG/EtS in an outpatient treatment setting." as published by Helander and co-authors in Alcohol Alcohol. 2012 Sep-Oct;47(5):552-7. doi: 10.1093/alcalc/ags065.

In figure 5, the top row of graphs corresponds to the maximum breath alcohol registered during one day, the second row of graphs corresponds to the compliance of measurement, i.e. the number of reported measurements divided by the number of requested measurements. The third row of graphs corresponds to the current sobriety index and the bottom row of graphs corresponds to a smoothed sobriety index (using data from 7 consecutive days to estimate a smoothened sobriety index at each point in time).

Individual A (left column of graphs) is an individual who is not drinking alcohol in any measurable quantities. The breath alcohol level is consistently near zero throughout the 70 consecutive days of monitoring (top-left graph). The compliance to measuring alcohol of individual A is very high (second row, left column graph). Accordingly, the sobriety index is high, indicating that this individual is likely sober which was also confirmed by the biomarkers.

Individual B (middle column) is an individual who is drinking heavily from time to time while having a fair compliance to measuring breath alcohol. With few exceptions, at the most one measurement per day was missed. The sobriety index is low during drinking periods and recovers to higher values in-between. For individual B, drinking was confirmed using biomarkers.

Individual C (right column) is an individual who drinks heavily (as confirmed by biomarkers), but who intentionally avoids measuring breath alcohol as requested when intoxicated. The sobriety index is reduced during periods of missed measurements, meaning that intoxication was detected through absence of results rather than presence of confirmed alcohol consumption.

This example illustrates, using real data collected from three individuals, that it is possible to calculate a sobriety index also in cases where measurement compliance is low.

Example 7

This example shows that it is possible to estimate if an individual is at risk being intoxicated. Within the study as described in Example 5, a subset of the individuals were using measurement devices that were presenting a questionnaire related to mood at least daily (and transferring results to the central server). For these individuals, a sobriety index (SI) for monitoring misuse of alcohol of an individual was composed of the actual measured blood alcohol values (requested three times per day) combined with recent missed measurements and combined with a mood parameter. Unwanted results (elevated blood alcohol level or missed measurement) were given additional penalty if occurring evening or morning, and if occurring consecutively. In schematic equation form, SI was calculated based on "raw mood adjusted sobriety index" (MASi) according to

$$MASi = 100 - (A + B*[\text{timepoint penalty}]) * [BAC] - C*[\text{missedBAC}] - D * [\text{consecutive penalty}] - E [\text{mood change}]$$

where A, B, C, D, and E are coefficients or weights, [timepoint penalty] is 1 if the most recent measurement of blood alcohol was evening or morning or a Friday and 0 otherwise, [BAC] is the most recent blood alcohol level measurement (expressed in g/L), [missedBAC] is 1 if the most recent request for measurement of blood alcohol was not conducted within the stipulated time-frame and 0 otherwise, [consecutive penalty] is 1 if both the most recent blood alcohol measurement and the second most recent blood alcohol measurement both had either elevated blood alcohol level or were not conducted within the stipulated time-frame (and 0 otherwise), and [mood change] is > 1 if the most recent questionnaire results indicate that mood has changed as compared to the recent 7 days. The sum of the coefficients (A + B) is approximately 40-60 divided by the blood alcohol legal limit for driving a car. The coefficient C is approximately 40-60, the coefficient D is approximately 90-C and the coefficient E is approximately 10.

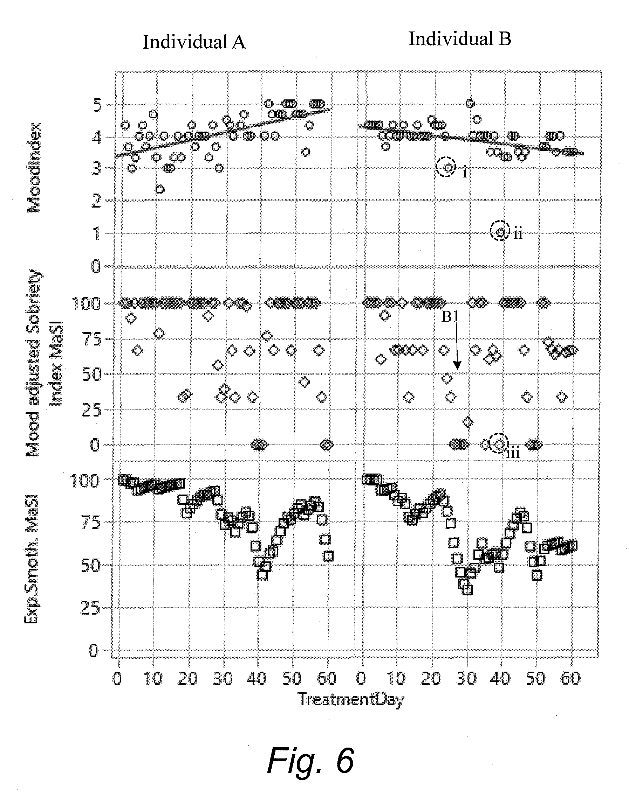

In figure 6, the top row of graphs corresponds to Mood index which is the estimation of mood based on questionnaire results, the middle row corresponds to MASi and the lower row corresponds to Exponentially smoothed MASi data, which is one possible way to construct a Sobriety index SI based on the raw MASi data. The left column refers to data from one individual (A) and the right column to another individual (B). The x-axis is in all cases treatment day.

MoodIndex (MI) vs. TreatmentDay (upper row of graphs) shows two deviating patterns for individual A and individual B. For individual A, MI increases with time. Individual A suffers from a confirmed relapse around treatment day 40 and reports consistently increasing MI. This individual may be at risk for relapse when mood is better than average, but in this example MI was not capable of identifying the onset of a relapse. For individual B, MI is decreasing over time. The relapse at approximately day 30 starts with an indication of decreased mood (i) and the arrow B1 shows the start of a 4 day long confirmed relapse. The relapse at day 30 was identified partly due to use of MI. For individual B there is a strong dip in mood around day 40 (ii) which does not influence the mood adjusted sobriety index (middle row of graphs) because it is already zero (iii) due to a positive measurement of breath alcohol. The MI adjusted sobriety index (low, MaSI shown as exponentially smoothed data) opens up the possibility to classify patients into groups which might take the relapse during high (e.g. individual A) and/or low (individual B) and/or independent of mood state(s) (B). This means that the deviation (in any direction) of current mood from recent historic mood may be a strong indicator of elevated risk for relapse, which in turn constitutes an elevated risk for being intoxicated.

The embodiments described above are merely given as examples, and it should be understood that the proposed technology is not limited thereto. It will be understood by those skilled in the art that various changes, combinations and modifications may be made without departing from the scope of the invention as set forth in the claims appended hereto. In particular, different part solutions in the different embodiments can be combined in other configurations, where technically possible.

**Claims**

1. Method for controlling an individual's access to potentially dangerous equipment, said method comprising:

   • at multiple points in time, requesting (S10) said individual to do at least one of:

   o making a measurement of a content of at least one intoxicating chemical substance in at least one biological sample from said individual;
   o answering a questionnaire provided in a measurement device (140),

   performing at least one of:

   o measuring (S20), with said measurement device (140), a content of at least one intoxicating chemical substance in at least one biological sample from said individual;
   o collecting (S30), with said measurement device (140), said individual's questionnaire answers,

   transmitting (S40) a result from at least one of said measurement and said questionnaire answers from said measurement device (140) to a central server unit (130),
   and storing (S50) said result in said central server unit (130);
   • upon said individual requesting access to potentially dangerous equipment (100), estimating (S60) a likelihood of non-use of said at least one intoxicating chemical substance based on at least said stored results;
   • if said estimated likelihood is below a predefined level:

   o requesting (S70) said individual to make a new measurement of a content of said at least one intoxicating chemical substance; and
   o estimating (S80) a likelihood of non-use of said at least one intoxicating chemical substance based on a result from said new measurement combined with said stored results; and

   • if said estimated likelihood is above a predefined level, granting (S90) said individual access to said potentially dangerous equipment (100).

2. Method of claim 1, further comprising identifying said individual during measurement of a content of at least one intoxicating chemical substance.

3. Method of claim 2, wherein said identifying comprises at least one of the following:

   • taking a picture of said individual;
   • conducting a retinal or iris scan of said individual;
   • reading a fingerprint of said individual;
   • analyzing a voiceprint of said individual.

4. Method of any preceding claim, wherein said estimating a likelihood of non-use of said at least one intoxicating chemical substance is based on a combination of:

• stored results from measurements of a content of said at least one intoxicating chemical substance covering the recent 1-30 days, and
• stored results from measurements of a content of said at least one intoxicating chemical substance covering the recent 10-100 days.

5. Method of any preceding claim, wherein said estimating a likelihood of non-use of said at least one intoxicating chemical substance is further based on said individual's participation in a support program or treatment program related to addictive use of said at least one intoxicating chemical substance.

6. Method of any preceding claim, wherein said estimating a likelihood of non-use of said at least one intoxicating chemical substance is further based on at least one of the following:

• time of day when said individual is requesting access to potentially dangerous equipment;
• day of week when said individual is requesting access to potentially dangerous equipment;
• result of a previous measurement of a content of at least one intoxicating chemical substance;
• elapsed time since a previous measurement of a content of at least one intoxicating chemical substance;
• number of stored measurements of a content of at least one intoxicating chemical substance that have been missed.

7. Method of any preceding claim, wherein said requesting (S10) said individual to do at least one of making a measurement and answering a questionnaire comprises at least one of:

• switching on a lamp or activating a sound;
• sending an SMS to said individual's cell phone;
• sending an email to said individual;
• call said individual by phone and play a prerecorded phrase.

8. Method of any preceding claim, wherein said at least one intoxicating chemical substance is alcohol.

9. Method of any preceding claim, wherein said biological sample is a non-invasive biological sample such as exhaled air, saliva, urine, feces or sweat.

10. Method of any preceding claim, wherein said potentially dangerous equipment is one of:

• a vehicle;
• a weapon or firearm;
• medical devices;
• construction or industrial machines or tools;
• an area where potentially dangerous equipment is located.

11. Method of any preceding claim, wherein said granting an individual access to potentially dangerous equipment comprises at least one of

• unlocking a door or a hatch;
• turning on a power supply to an electric apparatus;
• opening a valve to provide liquid or gaseous fuel to an apparatus which needs such fuel to function;
• enabling digital communication between modules that are essential for a potentially dangerous equipment to function.

12. Measurement device (140) configured to enable control of an individual's access to potentially dangerous equipment, wherein the measurement device (140) is configured to:

At multiple points in time,

• perform at least one of:

o measuring a content of at least one intoxicating chemical substance in at least one biological sample from said individual;

o providing a questionnaire to said individual and collecting said individual's questionnaire answers;

• transmit a result from at least one of said measurement and said questionnaire answers to a central server unit (130) to enable control of an individual's access to potentially dangerous equipment.

13. Measurement device (140) of claim 12, wherein the measurement device (140) is further configured to enable identification of said individual during measurement of a content of at least one intoxicating chemical substance.

14. Server unit (130) configured to control an individual's access to potentially dangerous equipment, wherein the server unit (130) is configured to:

• at multiple points in time, request said individual to do at least one of:

o making a measurement of a content of at least one intoxicating chemical substance in at least one biological sample from said individual;
o answering a questionnaire provided in a measurement device (140),

receive a result from at least one of said measurement and said questionnaire answers from said measurement device (140),
and store said result;
• upon said individual requesting access to potentially dangerous equipment (100), estimate a likelihood of non-use of said at least one intoxicating chemical substance based on at least said stored results;
• if said estimated likelihood is below a predefined level:

o request said individual to make a new measurement of a content of said at least one intoxicating chemical substance; and
o estimate a likelihood of non-use of said at least one intoxicating chemical substance based on a result from said new measurement combined with said stored results;

• if said estimated likelihood is above a predefined level, grant said individual access to said potentially dangerous equipment (100).

15. Computer-program product comprising a computer-readable medium having stored thereon a computer program comprising instructions, which when executed by at least one processor, cause the at least one processor to perform steps of the method of any of the claims 1 to 11.

*Fig. 1a*

*Fig. 1b*

START

REQUEST INDIVIDUAL TO MAKE MEASUREMENT
AND/OR ANSWER QUESTIONNAIRE — S10

MEASURE CONTENT OF INTOXICATING CHEMICAL
SUBSTANCE IN BIOLOGICAL SAMPLE OF INDIVIDUAL — S20/
AND/OR COLLECT QUESTIONNAIRE ANSWERS — S30

TRANSMIT RESULT TO CENTRAL SERVER — S40

STORE RESULT IN CENTRAL SERVER — S50

ESTIMATE LIKELIHOOD OF SOBERNESS BASED ON
STORED RESULTS — S60

REQUEST NEW
MEASUREMENT — S70

IS
LIKELIHOOD
ABOVE PRE-    NO
DETERMINED
LEVEL?

ESTIMATE LIKELIHOOD
OF SOBERNESS
BASED ON NEW — S80
MEASUREMENT AND
STORED RESULTS

YES

GRANT ACCESS TO EQUIPMENT — S90

END

*Fig. 2*

*Fig. 3*

Fig. 4

Fig. 5

*Fig. 6*

Europäisches
Patentamt

European
Patent Office

Office européen
des brevets

# EUROPEAN SEARCH REPORT

Application Number

EP 16 16 7737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/242469 A1 (MORGAN GERALD A [US] ET AL) 27 September 2012 (2012-09-27) * page 2, paragraph 26 - paragraph 30 * * page 3, paragraphs 34,38 - paragraph 41 * * page 4, paragraph 52 - page 5, paragraph 61 * * figure 3 * | 1-15 | INV. G06Q10/10 B60K28/06 |
| A | WO 2005/023112 A1 (SECR DEFENCE [GB]; WETHERELL ANTHONY [GB]; CLARK ADRIAN JAMES [GB]) 17 March 2005 (2005-03-17) * abstract * | 1-15 | |
| A | US 2013/021153 A1 (KEAYS BRAD [US]) 24 January 2013 (2013-01-24) * paragraphs [0002], [0013], [0014] * | 1-15 | |

TECHNICAL FIELDS
SEARCHED     (IPC)

G06Q
B60K

The present search report has been drawn up for all claims

| Place of search | Date of completion of the search | Examiner |
|---|---|---|
| The Hague | 19 August 2016 | Arbutina, Ljiljana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 7737

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2016

| Patent document cited in search report | Publication date | Patent family member(s) | Publication date |
|---|---|---|---|
| US 2012242469 A1 | 27-09-2012 | US 2012242469 A1<br>US 2014020970 A1 | 27-09-2012<br>23-01-2014 |
| WO 2005023112 A1 | 17-03-2005 | GB 2412188 A<br>GB 2423018 A<br>WO 2005023112 A1 | 21-09-2005<br>16-08-2006<br>17-03-2005 |
| US 2013021153 A1 | 24-01-2013 | US 2013021153 A1<br>US 2014320285 A1<br>US 2016153963 A1 | 24-01-2013<br>30-10-2014<br>02-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014180500 A
- TW 201426627
- US 20110079073 A

**Non-patent literature cited in the description**

- **RH MOOS ; BS MOOS.** Rates and predictors of relapse after natural and treated remission from alcohol use disorders. *Addiction,* February 2006, vol. 101 (2), 212-222
- Monitoring of the alcohol biomarkers PEth, CDT and EtG/EtS in an outpatient treatment setting. Alcohol Alcohol. Helander and co-authors, September 2012, vol. 47, 552-7